# FASCICULE DE BREVET EUROPEEN

(11) **EP 1 697 945 B1**
(45) Date de publication et mention de la délivrance du brevet: **16.12.2009**
(21) Numéro de dépôt: 04816433.9
(22) Date de dépôt: 17.12.2004
(51) Int. Cl.: G21C 3/322

(54) **EMBOUT D EXTREMITE POUR ASSEMBLAGE COMBUSTIBLE A NEZ D' ORIENTATION DE L'ECOULEMENT DU FLUIDE REFRIGERANT ET ASSEMBLAGE CORRESPONDANT**
BRENNSTOFFBAUGRUPPEN-ENDKAPPE MIT EINER KÜHLMITTELFLUSSORIENTIERUNGSDÜSE UND ENTSPRECHENDE BAUGRUPPE
FUEL ASSEMBLY END CAP COMPRISING A COOLANT-FLOW-ORIENTING NOZZLE AND CORRESPONDING ASSEMBLY

(30) Priorité: 22.12.2003 FR 0315183
(43) Date de publication de la demande: 06.09.2006
(73) Titulaire: Areva NP, 92400 Courbevoie (FR)
(72) Inventeur: LABARRIERE, Eric, F-01800 SAINT-ELOI (FR); BEATI, Angelo, F-69003 LYON (FR); BONNAMOUR, Michel, F-69008 LYON (FR)
(74) Mandataire: Domenego, Bertrand
(86) Numéro de dépôt international: PCT/FR2004/003299
(87) Numéro de publication internationale: WO 2005/066976

(56) Documents cités:
- DE-A- 4 114 004
- US-A- 3 775 249
- US-A- 4 655 990
- US-A- 4 919 883

## Description

La présente invention concerne un assemblage selon le préambule de la revendication 1.

L'invention s'applique en particulier à la réalisation d'embouts inférieurs d'assemblages de combustible pour réacteurs nucléaires à eau pressurisée (PWR en anglais).

DE-41 14 004 décrit un assemblage nucléaire pour réacteur de type soviétique sans tube-guide. Des mécanismes comprenant des corps de blocage de forme convergente maintiennent les extrémités inférieures des crayons de combustible.

EP-537 044 décrit un embout inférieur selon le préambule de la revendication 1. Cet embout comprend une paroi horizontale munie de pieds d'appui sur la plaque inférieure d'un coeur de réacteur nucléaire. Les éléments de liaison de l'embout inférieur à l'embout supérieur sont constitués par des tubes-guides. Ces tubes-guides sont fixés à la paroi horizontale de l'embout. La paroi horizontale comporte sous sa surface inférieure des nervures de renfort. Dans chaque zone de la paroi horizontale délimitée entre les nervures de renfort, des ouvertures de passage de l'eau de réfrigération sont ménagées de sorte que la paroi horizontale constitue un filtre anti-débris.

L'eau de réfrigération circule dans le coeur du réacteur verticalement de bas en haut. Plus précisément, l'eau pénètre dans le coeur au travers de la plaque inférieure de coeur, puis traverse l'embout inférieur par l'intermédiaire des ouvertures précitées, avant d'entrer en contact avec les surfaces extérieures des crayons de combustible.

L'eau circule dans le coeur avec une vitesse ascendante très importante.

On a constaté, lors du fonctionnement du coeur, que les crayons de combustible, et notamment leurs extrémités inférieures, étaient soumis à des vibrations susceptibles de les détériorer.

Plus précisément, des phénomènes de frottement ou « fretting » sont susceptibles d'apparaître notamment entre la grille inférieure du squelette de support et les gaines extérieures des crayons de combustible.

Ces phénomènes de frottement peuvent induire des endommagements de gaines extérieures susceptibles de provoquer le relâchement de produit ou de gaz de fission dans l'eau du circuit primaire.

Un but de l'invention est de résoudre ce problème en limitant les vibrations des crayons de combustible d'assemblages pour réacteur nucléaire.

A cet effet, l'invention a pour objet un assemblage selon la revendication 1.

Selon des modes particuliers de réalisation, l'assemblage peut comprendre l'une ou plusieurs des caractéristiques des revendications dépendantes 2 à 16.

L'invention sera mieux comprise à la lecture de la description qui va suivre, donnée uniquement à titre d'exemple, et faite en se référant aux dessins annexés, sur lesquels :
- la figure 1 est une vue schématique latérale d'un assemblage de combustible selon l'état de la technique,
- la figure 2 est une vue schématique en plan montrant la répartition des crayons de combustible dans l'assemblage de la figure 1,
- la figure 3 est une vue schématique de dessous de l'embout inférieur d'un assemblage de combustible selon une première variante d'un premier mode de réalisation de l'invention,
- la figure 4 est une vue schématique en perspective de l'embout de la figure 3,
- la figure 5 est une vue schématique, partielle et en perspective éclatée illustrant la liaison de l'embout inférieur de la figure 3 aux crayons de combustible et aux tubes-guides,
- la figure 6 est une vue partielle, schématique et en coupe prise suivant le plan VI-VI de la figure 5 et illustrant la liaison entre l'embout inférieur, les tubes-guides et les crayons de combustible,
- la figure 7 est une vue partielle, schématique et de dessus illustrant la liaison d'un pied au reste de l'embout inférieur de la figure 3,
- la figure 8 est une vue schématique, partielle, et en perspective illustrant une deuxième variante du premier mode de réalisation de l'invention,
- la figure 9 est une vue latérale, schématique et partiellement en coupe illustrant une première variante d'un embout inférieur selon un deuxième mode de réalisation de l'invention, et
- les figures 10 à 13 sont des vues analogues à la figure 9 illustrant d'autres variantes du deuxième mode de réalisation de l'invention.

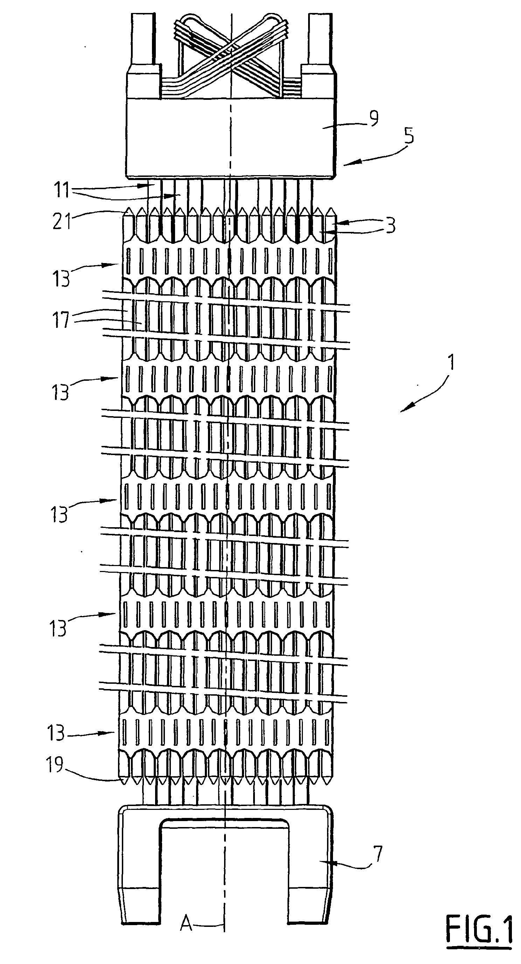

Afin d'illustrer le contexte de l'invention, la figure 1 représente schématiquement un assemblage 1 de combustible nucléaire pour réacteur à eau pressurisée. L'eau y assure donc une fonction de réfrigération et de modération, c'est-à-dire de ralentissement des neutrons produits par le combustible nucléaire.

L'assemblage 1 s'étend verticalement et de manière rectiligne le long d'une direction longitudinale A.

De manière classique, l'assemblage 1 comprend principalement des crayons 3 de combustible nucléaire et une structure ou squelette 5 de support des crayons 3.

Le squelette de support 5 comprend classiquement :
- un embout inférieur 7 et un embout supérieur 9 disposés aux extrémités longitudinales de l'assemblage 1,
- des tubes-guides 11 destinés à recevoir les crayons d'une grappe non-représentée de commande et d'arrêt du réacteur nucléaire, et
- des grilles 13 de maintien des crayons 3.

Les embouts 7 et 9 sont fixés aux extrémités longitudinales des tubes guides 11.

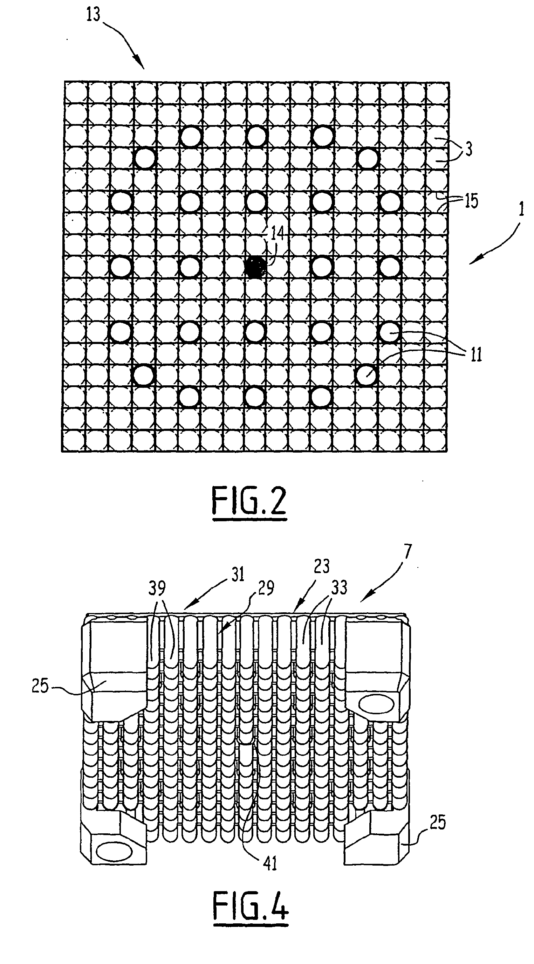

Les crayons 3 s'étendent verticalement entre les embouts 7 et 9. Les crayons 3 sont disposés aux noeuds d'un réseau sensiblement régulier à base carrée où ils sont maintenus par les grilles 13. Certains des noeuds du réseau sont occupés par les tubes-guides 11 et éventuellement par un tube d'instrumentation 14 visible au centre de la figure 2. Sur cette figure 2, les crayons 3 sont en pointillés, les tubes-guides 11 en trait fort, et le tube d'instrumentation 14 est représenté par un disque noir.

Les grilles 13 comprennent classiquement des jeux de plaquettes 15 entrecroisées qui délimitent entre elles des cellules centrées sur les noeuds du réseau régulier. La plupart des cellules sont destinées à recevoir un crayon de combustible 3. Vingt quatre cellules reçoivent chacune un tube-guide 11 et la cellule centrale reçoit le tube d'instrumentation 14.

Dans l'exemple des figures 1 et 2, les grilles de maintien 13 comprennent 17 cellules par côté et le réseau régulier comprend le même nombre de noeuds par côté.

Dans d'autres variantes, le nombre de cellules et de noeuds par côté peut être différent, par exemple de 14 x 14 ou de 15 x 15.

Chaque crayon 3 comprend de manière classique une gaine extérieure 17 fermée par un bouchon inférieur 19 et un bouchon supérieur 21, et contenant le combustible nucléaire. Il s'agit par exemple de pastilles de combustible empilées, les pastilles prenant appui sur le bouchon inférieur 19.

Un ressort hélicoïdal non-représenté de maintien peut être disposé dans la gaine 17 entre la pastille supérieure et le bouchon supérieur 21.

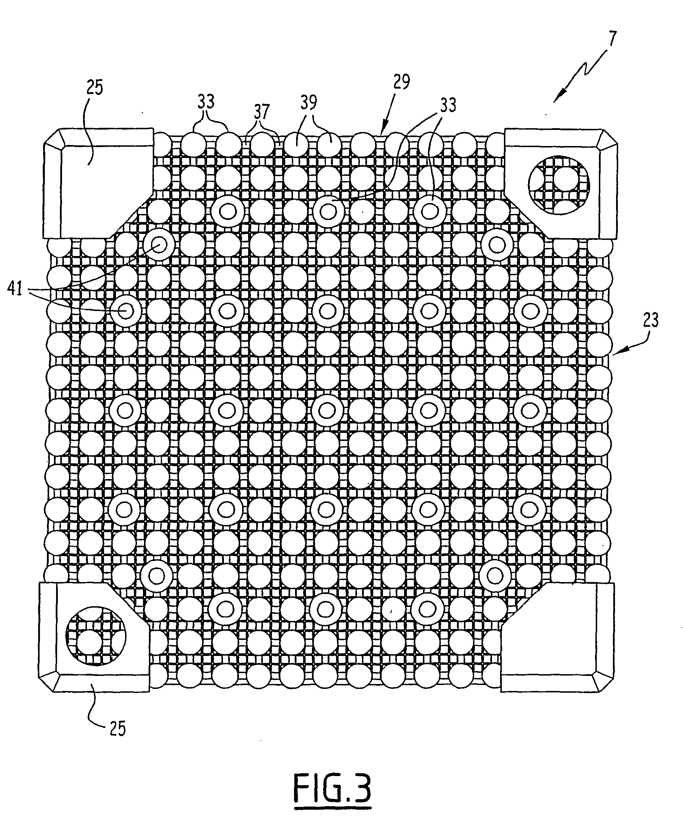

Les figures 3 à 7 illustrent un embout inférieur 7 selon l'invention qui peut équiper un assemblage 1 tel que celui décrit en regard des figures 1 et 2. De préférence, les grilles de maintien 13 sont des grilles telles que celles décrites dans les documents US-6 542 567 et EP-925 589. Dans certaines variantes également, l'embout 7 peut équiper des assemblages différents de celui décrit précédemment et/ou comprenant des grilles de maintien différentes.

L'embout 7 comprend une paroi 23 horizontale et des pieds 25 qui prolongent la paroi 23 vers le bas pour s'appuyer sur la plaque inférieure du coeur du réacteur.

La paroi 23 a une forme générale parallélépipédique plane et les pieds 25 sont disposés chacun dans un coin de la paroi 23. La paroi 23 comprend un corps inférieur 29 et une plaque supérieure 31 qui recouvre le corps 29.

Le corps inférieur 29 comprend une pluralité de blocs 33 qui sont disposés aux noeuds du même réseau que les crayons de combustible 3, les tubes-guides 11 et le tube d'instrumentation 14.

Ainsi, comme on le voit sur la figure 3, le corps 29 comprend 17x17 blocs 33 de formes cylindriques.

Chaque bloc 33 est donc situé longitudinalement en dessous soit d'un crayon de combustible 3, soit d'un tube-guide 11 soit du tube d'instrumentation 14, si l'assemblage 1 en comprend.

Les blocs 33 sont reliés entre eux par des nervures 37 de rigidification qui quadrillent le corps inférieur 29.

Les blocs 33 qui sont disposés sous les crayons de combustible 3, c'est-à-dire la plupart des blocs 33, ont un diamètre correspondant sensiblement au diamètre extérieur des crayons 3 et sont prolongés vers le bas par des nez 39. Ces nez 39 ont sensiblement des formes d'ogive convergeant vers le bas. Ces nez 39 sont venus de matière avec les blocs 33 considérés.

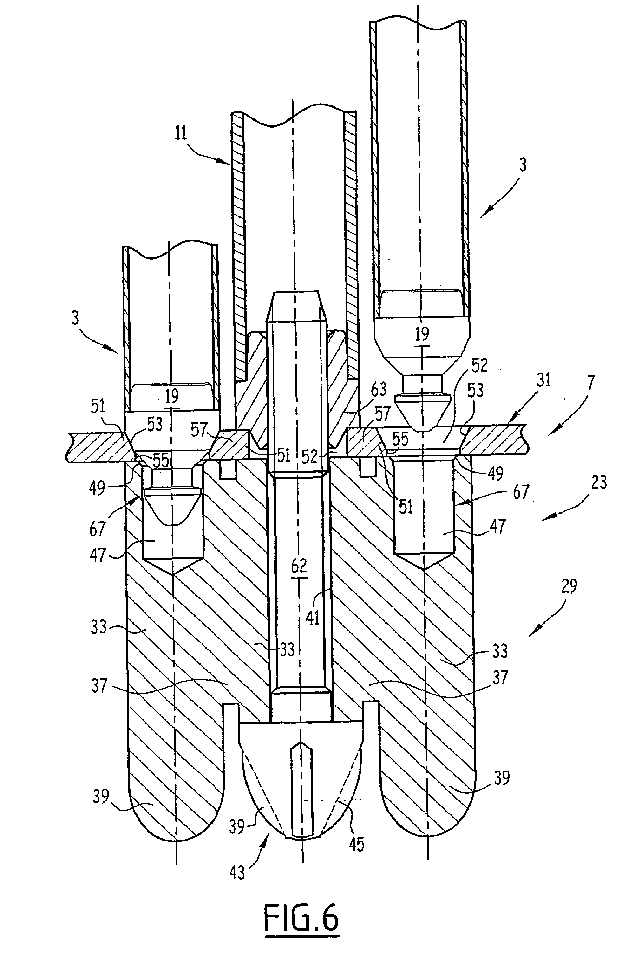

Comme on le voit sur les figures 3 et 6, les blocs 33 disposés sous les tubes-guides 11 et le tube d'instrumentation 14 ne comportent pas de nez 39 intégrés, mais sont perçés d'alésages verticaux 41. Pour chaque bloc 33 disposé sous un tube-guide 11, l'alésage 41 est un alésage de réception de la tige d'une vis 43 de fixation de l'embout 7 au tube-guide 11 considéré. On notera que la tête 45 de la vis 43 a sensiblement une forme d'ogive et constitue également un nez 39 disposé sous le bloc 33 considéré. On notera que les vis 43 n'ont pas été représentées sur la figure 3.

L'alésage 41 du bloc 33 central, disposé sous le tube d'instrumentation 14, est quant à lui laissé libre pour permettre le passage de la sonde du tube d'instrumentation 14.

Ainsi, le corps inférieur 29 de l'embout 7 présente un réseau de nez 39 similaire à celui des crayons de combustible 3 et des tubes-guides 11.

Ce réseau est seulement interrompu au droit du tube d'instrumentation 14. Dans certaines variantes, le réseau peut également être interrompu localement au voisinage de ce tube 14 de manière plus importante.

Dans ces variantes, l'essentiel des crayons 3 restent cependant disposés au-dessus de nez 39.

Les blocs 33 disposés sous les crayons de combustible 3 présentent en outre des orifices borgnes 47 qui débouchent dans la surface supérieure du corps inférieur 29. Ces orifices 47 présentent des tronçons supérieurs 49 divergeant vers le haut.

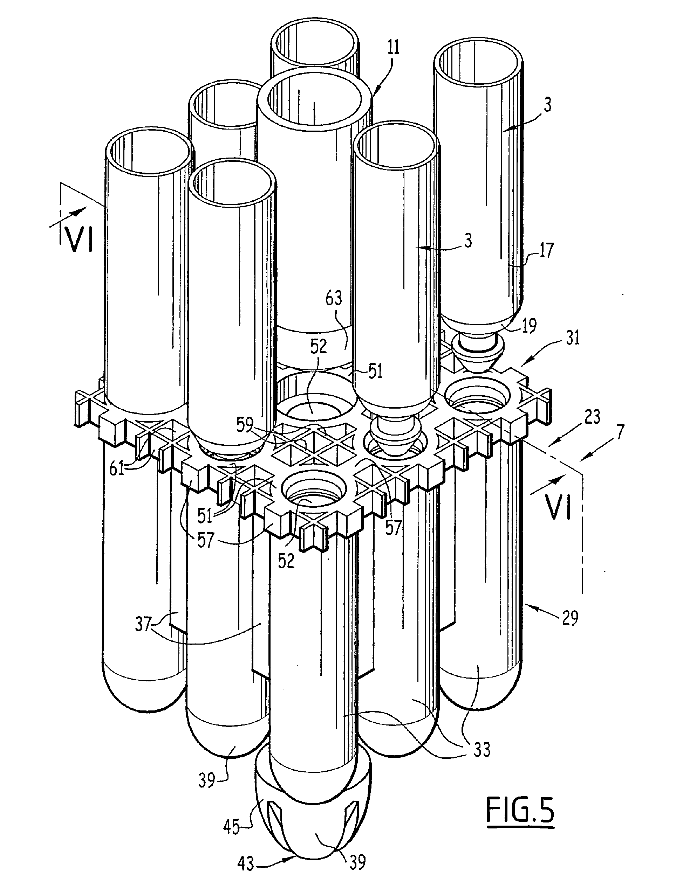

Comme illustré par les figures 5 et 6, la plaque supérieure 31 comporte des anneaux 51 disposés aux noeuds du même réseau sensiblement régulier que les blocs 33. Les passages intérieurs 52 des anneaux 51 disposés sous les crayons de combustible 3 ont des tronçons supérieurs 53 divergeant vers le haut et des tronçons inférieurs 55 sensiblement cylindriques disposés dans le prolongement des tronçons supérieurs divergents 49 des orifices borgnes 47. Le diamètre extérieur de ces anneaux 51 est sensiblement égal à celui des crayons 3.

Les passages intérieurs 52 des anneaux 51 disposés sous les tubes-guides 11 et le tube d'instrumentation 14 ont par exemple des formes cylindriques. Le diamètre extérieur de ces anneaux 51 est sensiblement égal à celui des tubes-guides 11 et du tube d'instrumentation 14.

Les anneaux 51 sont reliés entre-eux par des nervures de rigidification 57 disposées par exemple sous forme d'un quadrillage analogue à celui des nervures 37 du corps inférieur 29.

Lorsque la plaque supérieure 31 recouvre le corps inférieur 29 de l'embout 7, et comme on le voit sur les figures 5 et 6, les nervures 57 sont disposées au-dessus des nervures 37 du corps 29, les anneaux 51 sont disposés au-dessus des blocs 33. Il y a alors continuité longitudinale entre le corps 29 et la plaque 31.

Des lames 59, plus fines que les nervures 57 s'étendent entre les anneaux 51 et les nervures 57 pour délimiter dans la plaque 31 des ouvertures 61 de passage et de filtration de l'eau de réfrigération. Dans l'exemple représenté, les lames 59 sont disposées sous forme d'un quadrillage.

Ainsi, la plaque supérieure 31 forme un filtre anti-débris.

Comme illustré plus précisément par les figures 5 et 6, les tiges 62 des vis 43 de fixation des tubes-guides 11 traversent les alésages 41 correspondants et sont engagées dans des bouchons inférieurs 63 solidaires des tubes-guides 11. Les bouchons 63 prennent alors appui sur la plaque supérieure 31, et les têtes 45 des vis 43 prennent appui sous le corps inférieur 29.

La plaque supérieure 31 et le corps inférieur 29 sont plaqués l'un contre l'autre et l'embout 7 est solidaire du reste du squelette de support 5.

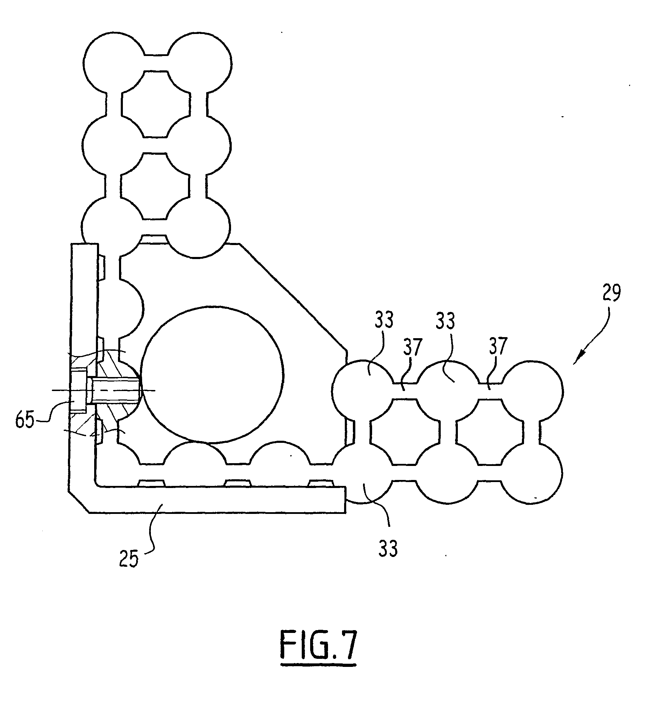

Comme on le voit sur la figure 7, les pieds 25 ont par exemple été fixés aux coins du corps inférieur 29 par l'intermédiaire de vis 65 de fixation.

On notera que sur la figure 7, le réseau de bloc 33 n'a été que partiellement représenté et leur structure n'a pas été détaillée.

Les passages 52 des anneaux 51 disposés sous les crayons de combustible 3 et les orifices borgnes 47 des blocs 33 disposés en dessous forment des logements 67 de réception des bouchons inférieurs 19 des crayons de combustible 3.

Dans l'exemple illustré par les figures 3 à 7, les bouchons inférieurs 19 prennent appui sur les tronçons supérieurs divergeants 53 de ces passages 67 via des régions de forme complémentaire. Les crayons 3 sont ainsi tous maintenus latéralement via leurs extrémités inférieures par rapport à l'embout inférieur 7. Les extrémités supérieures des crayons 3 sont par exemple libres comme dans l'état de la technique et ne sont pas maintenues par l'embout supérieur 9.

La présence des nez 39, placés dans le prolongement des crayons 3 et des tubes-guides 11, permet d'orienter les veines d'écoulement sensiblement verticalement le long des extrémités inférieures des crayons 3 et donc de diminuer les vitesses latérales d'écoulement de l'eau.

Les vibrations des extrémités inférieures crayons 3 sont ainsi réduites lors du fonctionnement du réacteur.

Les risques de vibration des crayons 3 sont encore plus réduits du fait du maintien latéral des extrémités inférieures des crayons 3 par l'embout 7 lui-même. Ainsi, les vibrations des crayons 3 sont limitées, à un point tel qu'il est possible de supprimer la grille inférieure 13 de maintien.

Les risques d'endommagement par fretting des gaines 17 des crayons de combustible 3 sont donc limités.

On notera que l'embout 7 présente en outre une bonne transparence à l'écoulement de l'eau et n'induit donc pas de perte de charge importante.

De manière générale, d'autres formes que des formes d'ogives peuvent être envisagées pour les nez 39 d'orientation longitudinale de l'écoulement au voisinage des extrémités inférieures des crayons 3.

Il peut ainsi s'agir notamment de formes convergeant vers le bas, telles que des formes coniques.

En outre, la densité des nez 39 peut être moins importante que dans l'exemple décrit précédemment, tant que l'essentiel des crayons 3 surmontent un nez 39.

Typiquement, l'embout inférieur 7 peut être réalisé en acier inoxydable ou en alliage de zirconium.

Il peut être réalisé par tout procédé classique.

Ainsi, le corps 29 et la plaque 31 peuvent être réalisés soit par moulage, soit par un procédé utilisant des jets d'eau abrasifs à très haute pression (plusieurs milliers de bars), cette eau pouvant être chargée de particules abrasives.

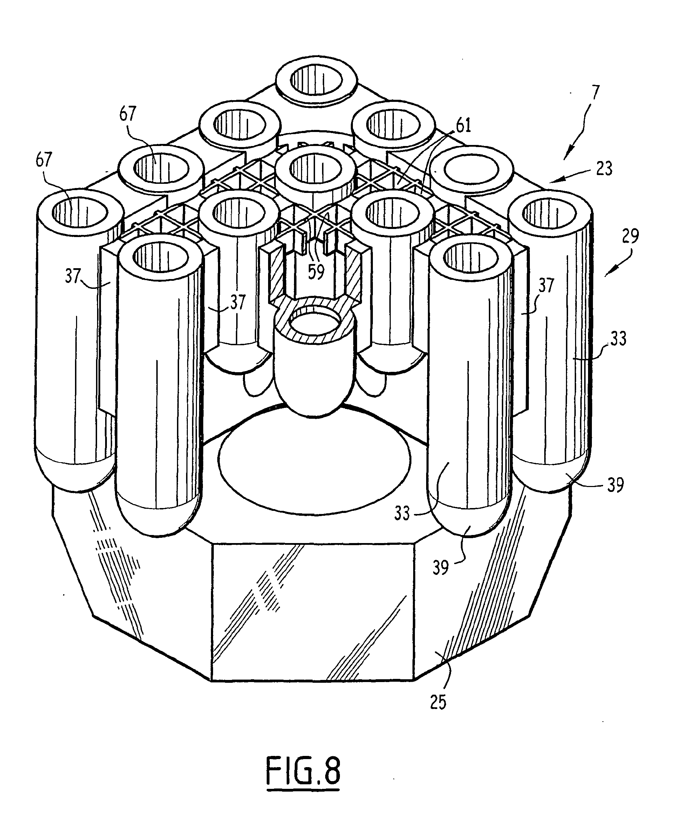

Comme illustré par la variante de la figure 8, la paroi horizontale 23 de l'embout inférieur 7 n'est pas nécessairement constituée en deux parties. Ainsi, dans cette variante, le filtre anti-débris est intégré au corps 29, c'est-à-dire que les lames 59 s'étendent entre les nervures de rigidification 37.

Dans la variante de la figure 8, on notera également que les pieds 25 sont, tout comme les lames 59, venus de matière avec le corps 29.

L'embout inférieur 7 est alors réalisé d'une seule pièce.

On notera également que des nez 39 disposés en un réseau correspondant sensiblement à celui des crayons 3 peuvent être utilisés indépendamment de la présence sur l'embout 7 de moyens de maintien des extrémités inférieures des crayons 3.

A l'inverse, le maintien des crayons 3 par l'embout inférieur 7 peut être plus important et inclure un blocage longitudinal comme illustré par le deuxième mode de réalisation de l'invention.

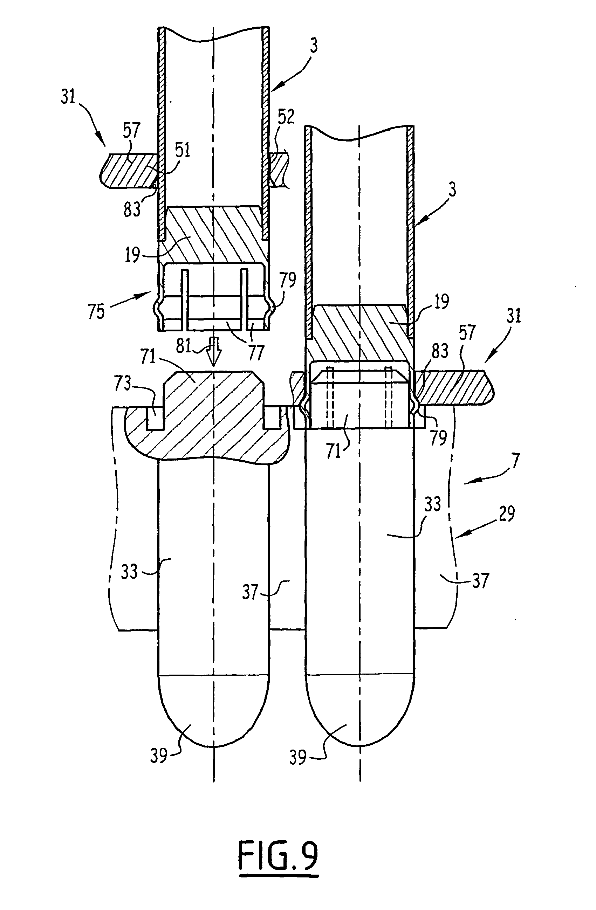

La première variante de ce mode de réalisation, illustrée par la figure 9, se distingue de celle des figures 1 à 7 principalement par le fait que les blocs 33 disposés longitudinalement sous les crayons de combustible 3 sont prolongés vers le haut par des tétons 71 bordés par des gorges circulaires 73.

Les bouchons inférieurs 19 des crayons 3 sont prolongés vers le bas par des viroles sensiblement cylindriques 75. Ces viroles 75 sont fendues pour présenter des languettes 77 déformables élastiquement.

Chaque virole 75 est déformée pour présenter un renflement bombé constituant un bourrelet circulaire 79.

Le diamètre intérieur de la virole 75 est légèrement inférieur au diamètre extérieur des tétons 71.

Pour assembler les crayons de combustible 3 à l'embout inférieur 7, on procède comme illustré par la partie gauche de la figure 9.

On a préalablement enfilé la plaque supérieure 31 sur les crayons de combustible 3 en faisant passer les extrémités supérieures des crayons de combustible 3 dans les passages intérieurs 52 des anneaux 51.

Ensuite, on vient enficher les viroles 75 sur les tétons 71, comme matérialisé par la flèche 81 sur la partie gauche de la figure 9.

Au cours de cet enfichage, les languettes 77 sont légèrement déformées élastiquement latéralement vers l'extérieur.

Ensuite, on abaisse la plaque supérieure 31 jusqu'à l'appuyer contre le corps inférieur 29, comme illustré par la partie droite de la figure 9.

Des tronçons inférieurs 83 des passages 52 des anneaux 51 viennent alors s'appuyer contre le bourrelet 79. Ces tronçons inférieurs 83 ont par exemple des formes divergeant vers le bas.

La fixation de l'embout inférieur 7 aux tubes-guides 11 par l'intermédiaire des vis 43 décrites précédemment permet de terminer la constitution du squelette 5 de support.

La plaque supérieure 31 est alors maintenue plaquée longitudinalement contre le corps inférieur 29 et serre ainsi longitudinalement les extrémités inférieures des crayons 3 contre le corps 29 par l'intermédiaire des bourrelets 79.

Tous les crayons de combustible 3 sont alors bloqués longitudinalement et latéralement par rapport à l'embout intérieur 7, induisant ainsi un blocage latéral des crayons 3 par rapport à l'embout 3, ce qui réduit encore plus les risques de vibration des crayons de combustible 3 et d'endommagement par fretting.

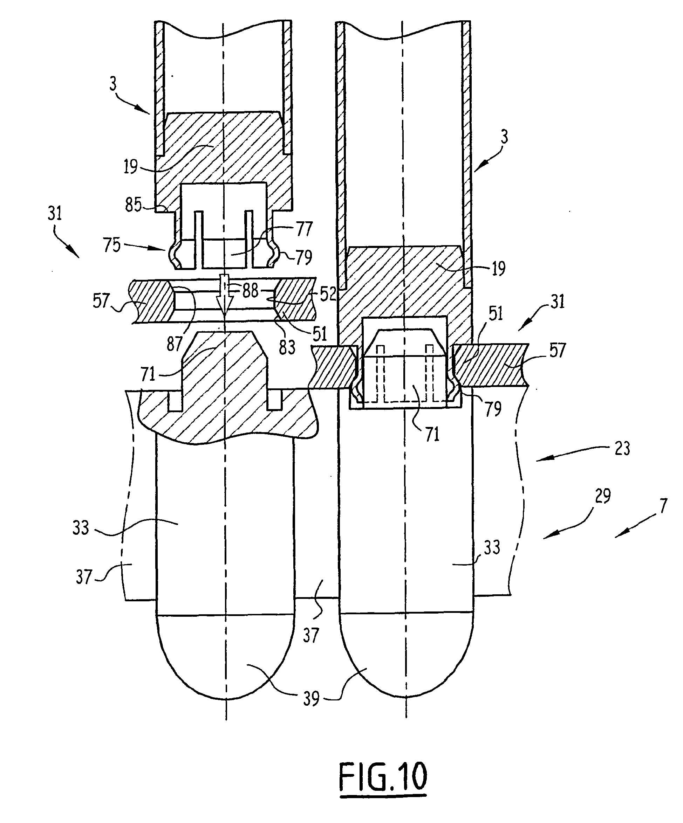

La figure 10 illustre une seconde variante de ce mode de réalisation.

Dans cette variante, les viroles 75 ont des diamètres extérieurs plus réduits, et donc inférieurs au diamètre extérieur des gaines 17 des crayons de combustible 3. Les viroles 75 sont alors reliées par des épaulements 85 aux surfaces latérales des bouchons inférieurs 19. Les passages centraux 52 des anneaux 51 présentent, en plus du tronçon inférieur divergeant 83, un tronçon supérieur 87 divergeant vers le haut.

Le diamètre extérieur des tétons 71 est plus réduit que dans la première variante de la figure 9.

Pour assembler les crayons de combustible 3 à l'embout inférieur 7, on commence par insérer les viroles 75 dans les passages 52 des anneaux 51 de la grille 31, comme matérialisé par la flèche 88 sur la partie gauche de la figure 10. Au cours de cette insertion, les languettes 77 se déforment élastiquement latéralement vers l'intérieur, jusqu'à ce que les bourrelets 79 viennent se placer sous les tronçons tronconiques 83 et que les épaulements 85 s'appuient sur la surface supérieure de la grille anti-débris 31. Les bouchons inférieurs 19 des crayons 3 sont alors assemblés par encliquetage à la grille supérieure 31.

Ensuite, on plaque la grille supérieure 31 contre le bloc inférieur 29 de sorte que les tétons 71 pénètrent à l'intérieur des viroles 75. Les tétons 71 empêchent alors la déformation des lames 77 et donc le désencliquetage des bouchons inférieurs 19 de la plaque supérieure 31.

La fixation de l'embout inférieur 7 aux tubes-guides 11 par l'intermédiaire des vis 43 permet de compléter la réalisation du squelette de support 5.

Dans cette deuxième variante, les extrémités inférieures des crayons de combustible 3 sont également bloquées longitudinalement et latéralement par rapport à l'embout 7.

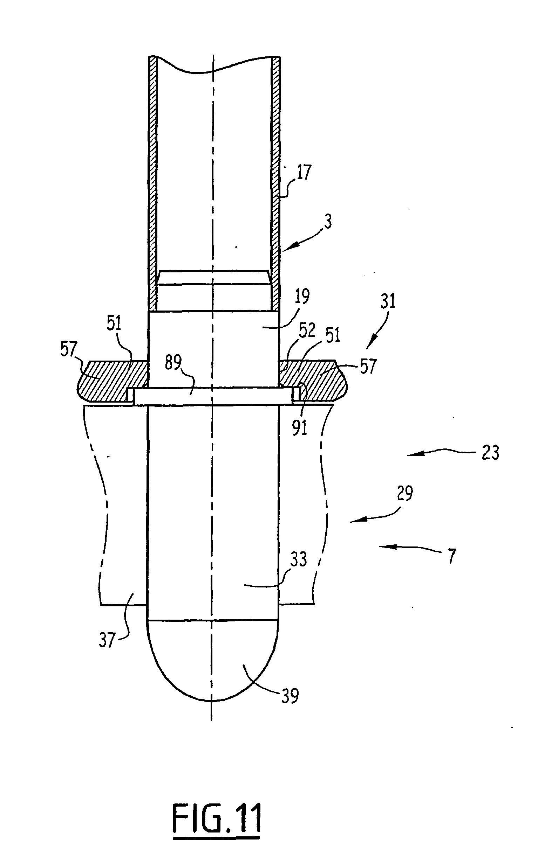

Dans la troisième variante de la figure 11, les bouchons inférieurs 19 des crayons de combustible 3 comportent des pieds inférieurs élargis 89, par exemple sous forme de disques de diamètre plus important que le diamètre extérieur des gaines extérieures 17.

Après avoir enfilé les crayons de combustible 3 par leurs extrémités supérieures dans les anneaux 51 de la grille 31, ces pieds 89 viennent s'engager dans des lamages inférieurs 91 ménagés dans les anneaux 51. Les pieds 89, et donc les extrémités inférieures des crayons de combustible 3, sont donc bloqués longitudinalement entre le corps inférieur 29 de l'embout 7 et la plaque supérieure 31, grâce aux vis 43 de fixation aux tubes-guides 11.

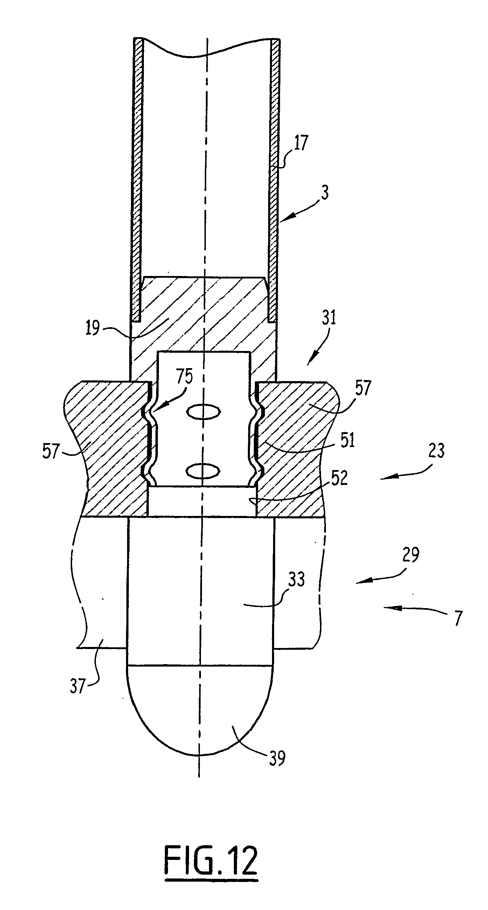

Dans la variante de la figure 12, les bouchons inférieurs 19 des crayons de combustible 3 comportent également des viroles 75 qui, toutefois, ne sont pas fendues. Ces viroles 75 ont été insérées dans les passages 52 des anneaux 51 et fixées aux anneaux 51 par dudgeonnage.

Les extrémités inférieures des crayons de combustible 3 sont donc bloquées longitudinalement et latéralement à la plaque supérieure 31 de l'embout inférieur 7 qui est elle-même fixée, par les vis 43, au corps 29 de l'embout inférieur 7.

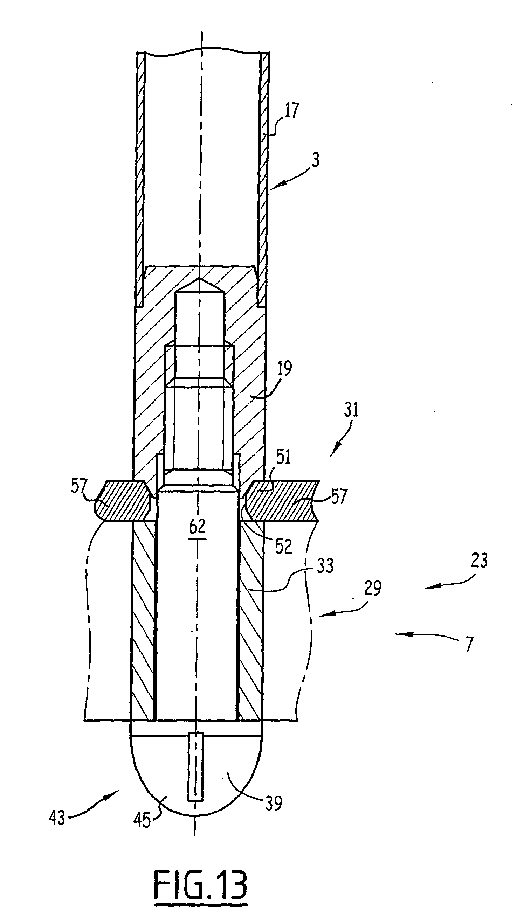

La figure 13 illustre encore une autre variante où le blocage des crayons de combustible 3 sur l'embout 7 est réalisé grâce à des vis 43 analogues à celles utilisées pour la fixation aux tubes-guides 11.

Ainsi, chaque nez 39 disposé sous un crayon 3 est formé par une tête 45 de vis 43, dont la tige 62 traverse le bloc 33 correspondant et est vissée dans le bouchon inférieur 19 du crayon 3 correspondant.

Dans chacun des modes de réalisation et dans chacune des variantes décrites ci-dessus, l'embout 7 peut ne pas comprendre de filtre anti-débris.

On notera à nouveau que la présence dans l'embout 7 de moyens de maintien, ou encore mieux de moyens de blocage latéral et/ou longitudinal de tous les crayons 3, peut être envisagée séparément de l'utilisation de nez 39 d'orientation de l'écoulement de l'eau de réfrigération le long des crayons 3, puisqu'ils permettent indépendamment de limiter les risques de vibration des crayons de combustible 3.

Dans certaines variantes, quelques crayons peuvent ne pas être maintenus par l'embout 7, l'essentiel des crayons restent cependant maintenus.

## Revendications

1. Assemblage de combustible (1) pour réacteur nucléaire à eau pressurisée, l'assemblage (1) comprenant des crayons de combustible (3) et un squelette (5) de support des crayons de combustible (3), les crayons de combustible (3) s'étendant le long d'une direction longitudinale (A) et étant disposés aux noeuds d'un réseau sensiblement régulier, le squelette de support (5) comprenant un embout inférieur (7), un embout supérieur (9) et des tubes-guides (11) de réception des crayons d'une grappe de commande et d'arrêt du réacteur nucléaire, les tubes-guides (11) reliant les embouts (7, 9), les crayons de combustible (3) étant disposés longitudinalement entre les embouts (7, 9), **caractérisé en ce que** l'embout inférieur (7) comprend des nez (39) d'orientation de l'écoulement d'un fluide réfrigérant du réacteur le long des extrémités longitudinales adjacentes (19) des crayons de combustible (3), les nez (39) étant disposés en des noeuds du réseau sensiblement régulier pour être placés dans le prolongement longitudinal d'au moins certains des crayons de combustible (3) et/ou d'au moins certains des tubes-guides (11) du squelette de support (5), et **en ce que** les nez (39) convergent vers l'extérieur de l'assemblage de combustible (1).

2. Assemblage selon la revendication 1, dans lequel l'embout inférieur (7) comprend des moyens (67 ; 71, 83 ; 51 ; 43) de maintien latéral d'extrémités longitudinales adjacentes (19) des crayons de combustible (3), lesquels moyens de maintien sont disposés en des noeuds du réseau sensiblement régulier.

3. Assemblage selon la revendication 2, dans lequel les moyens de maintien comprennent des logements (67) recevant les extrémités longitudinales adjacentes (19) des crayons de combustible (3).

4. Assemblage selon la revendication 2 ou 3, dans lequel les moyens de maintien constituent des moyens de blocage longitudinal des extrémités longitudinales adjacentes (19) des crayons de combustible (3) par rapport à l'embout inférieur (7).

5. Assemblage selon la revendication 4, dans lequel l'embout inférieur (7) comprend deux pièces (29, 31) enserrant entre elles les extrémités longitudinales adjacentes (19) des crayons de combustible (3).

6. Assemblage selon l'une des revendications précédentes, dans lequel l'embout inférieur (7) comprend un filtre anti-débris (31).

7. Assemblage selon les revendications 5 et 6 prises ensemble, dans lequel l'une des pièces constitue le filtre anti-débris (31).

8. Assemblage selon la revendication 5, dans lequel les moyens de blocage longitudinal comprennent des tétons (71) prévus sur l'embout inférieur (7) et des viroles (75) prévues aux extrémités longitudinales adjacentes (19) des crayons de combustible (3) et emmanchées sur lesdits tétons (71).

9. Assemblage selon les revendications 5 et 8 prises ensembles, dans lequel les viroles (75) comprennent des reliefs (79) d'appui sur l'une des pièces (29, 31).

10. Assemblage selon la revendication 5, dans lequel les extrémités longitudinales adjacentes (19) des crayons de combustible (3) comprennent des pieds élargis (89) enserrés entre les deux pièces (29, 31).

11. Assemblage selon la revendication 4, dans lequel les extrémités longitudinales adjacentes (19) des crayons de combustible (3) sont dudgeonnées sur l'embout inférieur (7).

12. Assemblage selon l'une des revendications 4 à 10, dans lequel les moyens de blocage longitudinal comprennent des vis (43) prenant appui sur l'embout inférieur (7) et engagées dans les extrémités longitudinales adjacentes (19) des crayons de combustible (3).

13. Assemblage selon l'une des revendications 4 à 10, dans lequel les moyens de blocage longitudinal sont des moyens de blocage par encliquetage.

14. Assemblage selon l'une des revendications précédentes, dans lequel certains au moins des nez (39) appartiennent à des organes (43) de fixation de l'embout inférieur (7) à des tubes-guides (11) du squelette de support (5) ou à des crayons de combustible (3).

15. Assemblage selon la revendication 14, dans lequel les organes de fixation sont des vis (43).

16. Assemblage selon l'une des revendications précédentes, dans lequel l'embout inférieur (7) comporte des pieds (25) d'appui sur une plaque inférieure du coeur du réacteur nucléaire.

## Claims

1. Fuel assembly (1) for a pressurised water nuclear reactor, the assembly (1) comprising fuel rods (3) and a support framework (5) for the fuel rods (3), the fuel rods (3) extending in a longitudinal direction (A) and being located at the nodes of a substantially rectangular grid, the support framework (5) comprising a lower end cap (7), an upper end cap (9) and guide tubes (11) for receiving the rods of a bundle for controlling and stopping the nuclear reactor, the guide tubes (11) connecting the end caps (7, 9), the fuel rods (3) being arranged longitudinally between the end caps (7, 9), **characterised in that** the lower end cap (7) comprises nozzles (39) for orienting the flow of a reactor coolant fluid along the adjacent longitudinal ends (19) of the fuel rods (3), the nozzles (39) being arranged at the nodes of the substantially regular grid so as to be positioned on a longitudinal extension of at least some of the fuel rods (3) and/or at least some of the guide tubes (11) of the support framework (3) and/or at least some of the guide tubes (11) of the support framework (5), and **in that** the nozzles (39) converge towards the outside of the fuel assembly (1).

2. Assembly according to claim 1, wherein the lower end cap (7) comprises means (67; 71, 83; 51; 43) for laterally holding the adjacent longitudinal ends (19) of the fuel rods (3), the said holding means being arranged at nodes of the substantially regular grid.

3. Assembly according to claim 2, wherein the holding means comprise recesses (67) that receive the adjacent longitudinal ends (19) of the fuel rods (3).

4. Assembly according to claim 2 or 3, wherein the holding means form longitudinal blocking means for the adjacent longitudinal ends (19) of the fuel rods (3) relative to the lower end cap (7).

5. Assembly according to claim 4, wherein the lower end cap (7) comprises two parts (29, 31) that grip between them the adjacent longitudinal ends (19) of the fuel rods (3).

6. Assembly according to one of the preceding claims, wherein the lower end cap (7) comprises an anti-debris filter (31).

7. Assembly according to claims 5 and 6 taken together, wherein one of the parts forms the anti-debris filter (31).

8. Assembly according to claim 5, wherein the longitudinal blocking means comprise studs (71) provided on the lower end cap (7) and ferrules (75) provided on the adjacent longitudinal ends (19) of the fuel rods (3) and fitted onto said studs (71).

9. Assembly according to claims 5 and 8 taken together, wherein the ferrules (75) comprise raised portions (79) bearing on one of the parts (29, 31).

10. Assembly according to claim 5, wherein the adjacent longitudinal ends (19) of the fuel rods (3) comprise widened feet (89) gripped between the two parts (29, 31).

11. Assembly according to claim 5, wherein the adjacent longitudinal ends (19) of the fuel rods (3) are fitted onto the lower end cap (7) by expansion.

12. Assembly according to one of claims 4 to 10, wherein the longitudinal blocking means comprise screws (43) bearing on the lower end cap (7) and engaging in the adjacent longitudinal ends (19) of the fuel rods (3).

13. Assembly according to one of claims 4 to 10, wherein the longitudinal blocking means are latching locking means.

14. Assembly according to one of the preceding claims, wherein at least some of the nozzles (39) belong to means (43) for securing the lower end cap (7) to guide tubes (11) of the support framework (5) or to fuel rods (3).

15. Assembly according to claim 14, wherein the fixing means are screws (43).

16. Assembly according to one of the preceding claims, wherein the lower end cap (7) comprises feet (25) bearing on a lower plate of the core of the nuclear reactor.

## Patentansprüche

1. Brennelementkassette (1) für einen Druckwasserkernreaktor, wobei die Kassette (1) aufweist: Brennstäbe (3) und ein Skelett (5) zum Halten der Brennstäbe (3), wobei sich die Brennstäbe (3) entlang einer Längsrichtung (A) erstrecken und an den Knotenpunkten eines im Wesentlichen gleichmäßigen Gitters angeordnet sind, wobei das Halteskelett (5) aufweist: ein unteres Endstück (7), ein oberes Endstück (9) und Führungsrohre (11) zum Aufnehmen der Stäbe eines Steuer- und Abschaltbündels des Atomreaktors, wobei die Führungsrohre (11) die Endstücke (7, 9) miteinander verbinden, wobei die Brennstäbe (3) längs zwischen den Endstücken (7, 9) positioniert sind, **dadurch gekennzeichnet, dass** das untere Endstück (7) Nasen (39) zum Ausrichten des Stromes eines Kühlmittels des Reaktors entlang benachbarter Längsenden (19) der Brennstäbe (3) aufweist, wobei die Nasen (39) an Knotenpunkten des im Wesentlichen gleichmäßigen Gitters angeordnet sind, um in der längsverlaufenden Verlängerung zumindest bestimmter Brennstäbe (3) und/oder bestimmter Führungsrohre (11) des Halteskeletts (5) angeordnet zu sein, und dass die Nasen (39) in Richtung zu dem Äußeren der Brennelementkassette (1) konvergieren.

2. Kassette gemäß Anspruch 1, wobei das untere Endstück (7) Mittel (67, 71, 83, 51, 43) zum lateralen Halten von benachbarten Längsenden (19) der Brennstäbe (3) aufweist, wobei die Haltemittel an Knotenpunkten des im Wesentlichen gleichmäßigen Gitters angeordnet sind.

3. Kassette gemäß Anspruch 2, wobei die Haltemittel Aufnahmen (67) aufweisen, die die benachbarten Längsenden (19) der Brennstäbe (3) aufnehmen.

4. Kassette gemäß Anspruch 2 oder 3, wobei die Haltemittel Mittel zum Längsblockieren der benachbarten Längsenden (19) der Brennstäbe (3) relativ zu dem unteren Endstück (7) darstellen.

5. Kassette gemäß Anspruch 4, wobei das untere Endstück (7) zwei Teile (29, 31) aufweist, die zwischen einander die benachbarten Längsenden (19) der Brennstäbe (3) einspannen.

6. Kassette gemäß einem der vorhergehenden Ansprüche, wobei das untere Endstück (7) einen Anti-Schmutzfilter (31) aufweist.

7. Kassette gemäß den Ansprüchen 5 und 6 in Kombination, wobei eines der Teile den Anti-Schmutzfilter (31) darstellt.

8. Kassette gemäß Anspruch 5, wobei die Längsblockierungsmittel an dem unteren Endstück (7) vorgesehene Ansätze (71) und Hülsen (75) aufweisen, die an den benachbarten Längsenden (19) der Brennstäbe (3) vorgesehen und an die Ansätze (71) gepasst sind.

9. Kassette gemäß den Ansprüchen 5 und 8 in Kombination, wobei die Hülsen (75) Reliefs (79) zum Abstützen auf einem der Teile (29, 31) aufweisen.

10. Kassette gemäß Anspruch 5, wobei die benachbarten Längsenden (19) der Brennstäbe (3) erweiterte Füße (89) aufweisen, die zwischen den beiden Teilen (29, 31) eingespannt sind.

11. Kassette gemäß Anspruch 4, wobei die benachbarten Längsenden (19) der Brennstäbe (3) am unteren Endstück (7) aufgeweitet sind.

12. Kassette gemäß einem der Ansprüche 4 bis 10, wobei die Längsblockierungsmittel Schrauben (43) aufweisen, die auf dem unteren Endstück (7) abgestützt sind und in die benachbarten Längsenden (19) der Brennstäbe (3) eingreifen.

13. Kassette gemäß einem der Ansprüche 4 bis 10, wobei die Längsblockierungsmittel Mittel zum Blockieren durch Einrasten sind.

14. Kassette gemäß einem der vorhergehenden Ansprüche, wobei zumindest bestimmte Nasen (39) zu Mitteln (43) zum Befestigen des unteren Endstücks (7) an Führungsrohren (11) des Halteskeletts (5) oder zu Brennstäben (3) gehören.

15. Kassette gemäß Anspruch 14, wobei die Befestigungsmittel Schrauben (43) sind.

16. Kassette gemäß einem der vorhergehenden Ansprüche, wobei das untere Endstück (7) Füße (25) zum Abstützen auf einer unteren Platte des Kerns des Kernreaktors aufweist.
